Europäisches Patentamt

(19) European Patent Office

Office européen des brevets

(11) Publication number: **0 100 111**
**B1**

(12) EUROPEAN PATENT SPECIFICATION

(45) Date of publication of patent specification: **25.11.87**

(51) Int. Cl.⁴: **H 04 M 3/56**

(21) Application number: **83200956.7**

(22) Date of filing: **28.06.83**

(54) **Four-wire amplified line and conference circuit comprising such fourwire amplified lines.**

(30) Priority: **02.07.82 NL 8202667**

(43) Date of publication of application:
**08.02.84 Bulletin 84/06**

(45) Publication of the grant of the patent:
**25.11.87 Bulletin 87/48**

(84) Designated Contracting States:
**DE FR GB SE**

(56) References cited:
**DE-A-2 016 394**
**NL-A- 136 420**
**NL-A- 136 420**
**US-A-4 008 376**

**IEEE TRANSACTIONS ON COMMUNICATION
TECHNOLOGY, vol. COM-16, no. 1, February
1968, pages 168-172, Minneapolis, USA**

(73) Proprietor: **N.V. Philips' Gloeilampenfabrieken
Groenewoudseweg 1
NL-5621 BA Eindhoven (NL)**

(72) Inventor: **Van den Enden, Adrianus
c/o INT. OCTROOIBUREAU B.V. Prof. Holstlaan 6
NL-5656 AA Eindhoven (NL)**
Inventor: **Van Mill, Job F.
c/o INT. OCTROOIBUREAU B.V. Prof.Holstlaan 6
NL-5656 AA Eindhoven (NL)**

(74) Representative: **Van Schaik, Johannes
Wilhelmus et al
INTERNATIONAAL OCTROOIBUREAU B.V. Prof.
Holstlaan 6
NL-5656 AA Eindhoven (NL)**

Courier Press, Leamington Spa, England.

## Description

The invention relates to a four-wire amplified line comprising a first amplifier intended for one communication direction and a second amplifier for the other communication direction, each amplifier comprising control means for switching the relevant gain factor from a high value to a low value or *vice versa,* the four-wire amplified line being coupled *via* a hybrid to a two-wire line for two-way communication and a detection circuit being present arranged for generating control signals for the control means depending on the direction in which net energy is transmitted. Such a four-wire amplifier line is disclosed in Netherlands Patent No. 136,420, in which this line forms part of a telephone circuit arranged for conference communication between a plurality of subscriber sets. A subscriber set has access to the other, similar subscriber sets *via* a two-wire line, a hybrid, the four-wire amplified line, a further hybrid and a two-wire line. By means of the detection circuit, which is coupled to the two-wire line it is determined in which direction the (net) speech energy flows. Thereafter, the amplifier in the four wire line in the relevant communication direction is rapidly switched to a high gain; the other amplifier which is included in the four-wire line for the other communication direction is simultaneously switched to a low gain. This circuit has the disadvantage that information from the two-wire side is required to switch the amplifiers at the four-wire side correctly. This requires additional signal wires. In addition, with electronic exchanges it is undesirable to take this information from the two-wire side as the signals are there still symmetrical relative to ground.

It is an object of the invention to provide a solution which does not have the above-mentioned disadvantages. According to the invention, the four-wire line is characterized in that the said detection circuit is coupled to the four-wire line that the detection circuit comprises an adding means coupled to the four-wire lines for obtaining the sum of the voltages in the four-wire lines, and a subtracting means coupled to the four-wire lines for obtaining the difference of the voltages in the four-wire lines and that the detection circuit further comprises a phase difference element coupled to the adding and subtracting means for determining the phase difference between the sum and the difference voltages for deriving the control signals for the control means. It is remarked that from German Offenlegungsschrift 2,016,394 it is known to amplify the four-wire lines selectively, however, this is performed on the basis of the measurement of the line voltages only, whereas the present invention unconditionally requires the use of the physical property of directionality connected with the conception of energy.

The invention further relates to a conference circuit comprising a conference network to which three or more of the above-mentioned four-wire lines are connected, each four-wire amplified line comprising a first amplifier intended for one communication direction and a second amplifier for the other communication direction, each amplifier comprising control means for switching the relevant gain factor from a high value to a low value or *vice versa,* the four-wire line being coupled *via* a hybrid to a two-wire line for two-way communication, and a detection circuit being present arranged for generating control signals for the control means, depending on the direction in which net energy is transmitted in the two-wire circuit, whereby the said detection circuit is coupled to the four-wire line.

More specifically when the four-wire line is used in a conference circuit, the problem is encountered that it is not ensured that in all circumstances only the pair of amplifiers in the four-wire line of one conference participant (the speaker operates in the direction opposite to the pair of amplifiers in the four-wire lines of the other conference participants (the listeners). Due to interruptions, noise signals from mains, or ambient noise, it may happen that a net energy transfers towards the conference network is detected in two or even more two-wire lines and the associated pair of amplifiers are switched over to the associated direction.

It is an object of the invention to provide solution for this problem. According to the invention, a conference circuit of the above-referenced type is characterized in that the conference circuit comprises means for attenuating the signal coming from one communication direction, which means for attenuating are connected between the detecting circuit and one of the four-wire lines, and amplifying the signal coming from the other communication direction, which means for amplifying are connected between the detecting circuit and the other one of the four-wire lines.

For a further explanation of the invention an embodiment thereof will now be further described by way of example with reference to the accompanying drawings.

Therein:

Fig. 1 shows a four-wire line comprising a detection circuit in accordance with the invention, and

Fig. 2 shows a conference circuit in which four-wire lines in accordance with the invention are employed.

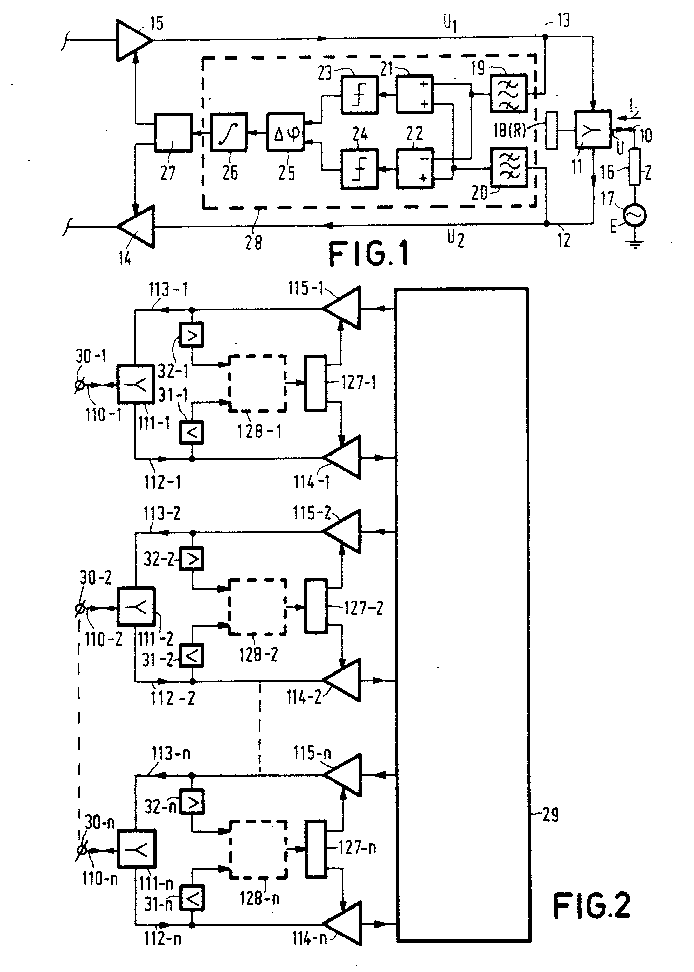

In Fig. 1 reference numeral 10 denotes a two-wire line arranged for two-way communication. The two-wire line 10 is coupled *via* a hybrid 11 to a four-wire line 12 for communication in one direction and a four-wire line 13 for communication in the other direction. Controlled amplifiers 14 and 15, respectively are arranged in the four-wire lines 12, 13 to amplify the signals present on the relevant line. A subscriber set is connected to the other side of the two-wire line; in Fig. 1 this is schematically shown by a terminating impedance 16 in series with a voltage source 17 to ground. The amplifiers 14 and 15 are controlled so that for a (net) information energy transfer to subscriber set 16, 17 amplifier 15 has a high gain factor and amplifier 14 a low gain factor, and for a (net) energy transfer from subscriber set 16, 17 to an other subscriber set amplifier 14 has a high gain factor and amplifier 15 a low gain factor. In known telephone circuits (such as described, for example, in Netherlands Patent No. 136,420) a detection circuit is provided for the above purpose to determine the direction in which the net energy transport is effected. On the basis of that information the amplifiers 14 and 15 in the four-wire line are controlled.

The invention provides an advantageous alternative. This solution is based on recognition of the following. Let hybrid 11 be an ideal hybrid comprising a balanced impedance 18 having a value R. It then holds that:

$$U_2 = \frac{RE}{Z+R} + \frac{(Z-R)U_1}{Z+R}; \qquad (1)$$

$$U = \frac{RE}{Z+R} + \frac{2ZU_1}{Z+R}; \qquad (2)$$

and

$$IR = \frac{RE}{Z+R} - \frac{2RU_1}{Z+R}; \qquad (3)$$

wherein $U_1$ is the voltage on four-wire line 13; $U_2$ the voltage on four-wire line 12; I, U are the current and the voltage, respectively in two-wire line 10; Z is the value of terminating impedance 16 and E is the value of voltage source 17.

Equation (2) can be rewritten as

$$U = \frac{RE}{Z+R} + \frac{(Z-R)U_1}{Z+R} + \frac{(Z+R)U_1}{Z+R} \qquad (4a)$$

or

$$U = U_1 + U_2 \qquad (4b)$$

Equation (3) can be rewritten as

$$IR = \frac{RE}{Z+R} + \frac{(Z-R)U_1}{Z+R} - \frac{(Z+R)U_1}{Z+R} \qquad (5a)$$

or

$$UR = U_2 - U_1 \qquad (5b)$$

From equation (4b) it follows that a measure of the voltage U in two-wire line is given by the sum of the voltages $(U_1+U_2)$ on the four-wire line and from equation (5b) it follows that a measure of the current I in the two-wire line is given by the difference between the voltages $U_2-U_1$ on the four-wire line. This is realised as follows. The voltage $U_1$ on four-wire line 13 is conveyed through a bandpass filter 19 and the voltage $U_2$ on four-wire line 12 is conveyed through a bandpass filter 20, the most important range, for example the speech range, being passed. Thereafter the two filtered voltages are applied to an adder element 21 and a difference element 22 to form a voltage which is a measure of U (cf. 4b) and I (cf. 5b), respectively. Thereafter, the sum and difference voltage, respectively are each applied *via* a limiter 23 and 24, respectively to a phase difference element 25. This element determines the phase difference between U and I and this phase difference is integrated over a certain period of time by an integrator 26, which is connected to phase difference element 25. Thereafter the sign of the integrated signal is employed by control element 27 to switch the amplifiers 14 and 15, the amplifier 14 having a high gain and amplifier 15 a low gain in one case, and the amplifier 14 having a low gain and amplifier 15 having a high gain in the other case. The control element 27 may be realized by means of an analog switch of the type HEF4052.

The circuit has the advantage that no additional signal wires from the four-wire portion to the two-wire portion are required.

This circuit may be used in connections comprising amplifiers and more specifically in such connections in conference circuits.

Fig. 2 shows a conference circuit which is known *per se,* comprising a conference network 29 to which *n* four-wire line 112-1, 112-2, ... 112-n and 113-1, 113-2, ... 113-n are connected. In order to indicate the relationship between some elements shown in Fig. 2 and those shown in Fig. 1 the relevant reference numerals in Fig. 2 are increased by 100. The four-wire lines comprise amplifiers 114-i and 115-i (i=1, 2, ... n) which are switched by control means 127-i. Each four-wire line 112-i, 113-i is connected *via* a hybrid 111-i to a two-wire line 110-i, it being possible to connect subscriber sets to the other side of the two-wire lines by means of terminals 30-i. The detection circuits 128-i are coupled to four-wire lines 112-i/113-i.

The conference circuit comprising the four-wire lines operates as follows. Let it be assumed that the subscriber set connected to terminal 30-1 is active and the other subscriber sets 30-2, ... 30-m are passive, then detection circuit 128-1 will detect that the net energy in two-wire line 110-1 flows to conference network 29 and the detection circuits 128-2, ... 128-n will detect that the net energy in the associated two-wire lines 110-2, ... 110-n flows from conference network 29. Consequently, amplifier 114-1 and also the amplifiers 115-2, 115-3, ... 115-n will be adjusted to a high gain and amplifier 115-1 and also the amplifiers 114-2, 114-3, ... 114-n will be adjusted to a low gain.

It may happen that several subscriber sets are detected as being active simultaneously, which may be the result of interruptions, noise signals from the telephony network or a high ambient noise at a subscriber set. To prevent this, an attenuation circuit 31-i (i=1, 2, ... n) is provided in each of the supply lines to the detection circuit for attenuating the signal coming from four-wire lines 112-1 for one communication direction. For the other communication direction an amplifier circuit 32-1 is provided in each of the supply lines to the detection circuit coupled to four-wire line 113-i. In the above-cited example, in which the subscriber set which is coupled to terminals 30-1 is operative and consequently amplifier 114-1 has a high gain and amplifier 115-1 a low gain, the above-described measures accomplish that a threshold is built-in to prevent the amplifiers 114/ 115 in the other four-wire line from switching over in response to the fact that the relevant subscriber set becomes operative. The amplifiers are not switched by said subscriber set until this threshold is exceeded. In a conference circuit arranged for 8 participants and whose conference network has an attenuation of 8 1/2 dB, the attenuation circuit 31-i may have an attenuation of −4 1/4 dB, while amplifier circuit 32-i may have a gain of 4 1/4 dB.

It should be noted that the designation of the amplifier circuits 38-1 and the attenuation circuits 31-i, respectively is based on the relative signal processing operation effected: the two circuits might with equal effect be in the form of amplifiers or both in the form of attenuators. In practice it is advantageous for both circuits to be in the form of attenuators: 31-i having a comparatively high attenuation and 32-i having a comparatively low attenuation.

This conference circuit has the advantage that a threshold is provided against unwanted and frequent change-over actions. In addition, the amplification of signals coming from different subscriber sets is simultaneously counteracted, while the attenuation for the subscriber set which is not operative is not affected.

### Claims

1. A four-wire amplified line comprising a first amplifier for one communication direction and a second amplifier for the other communication direction, each amplifier comprising control means for switching the relevant gain factor from a high value to a low value or *vice versa,* the four-wire line being coupled *via* a hybrid to a two-wire line for two-way communication, and a detection circuit being present arranged for generating control signals for the control means, depending on the direction in which net energy is transmitted in the two-wire line, characterized in that the said detection circuit (28) is coupled to the four-wire line (12, 13) that the detection circuit (28) comprises an adding means (21) coupled to the four-wire lines for obtaining the sum of the voltages in the four-wire lines, and a subtracting means (22) coupled to the four-wire lines for obtaining the difference of the voltages in the four-wire lines and that the detection circuit further comprises a phase difference element (25) coupled to the adding and subtracting means (21, 22) for determining the phase difference between the sum and the difference voltages for deriving the control signals for the control means (27).

2. A conference circuit comprising a conference network to which three or more four-wire amplified lines as claimed in Claim 1 are connected, each four-wire amplified line comprising a first amplifier for one communication direction and a second amplifier for the other communication direction, each amplifier comprising control means for switching the relevant gain factor from a high value to a low value or *vice versa,* the four-wire line being coupled *via* a hybrid to a two-wire line for two-way communication, and a detection circuit being present arranged for generating control signals for the control means, depending on the direction in which net energy is transmitted in the two-wire line, whereby the said detection circuit is coupled to the four-wire line, a subscriber set being connected to each two-wire line connected to the four-wire line, characterized in that the conference circuit comprises means for attenuating (31) the signal coming from one communication direction (112) which means for attenuating (31) are connected between the detecting circuit (128) and one of the four-wire lines (112) and amplifying (32) the signal coming from the other communication direction (113) which means for amplifying (32) are connected between the detecting circuit (128) and the other one of the four-wire lines (113).

### Patentansprüche

1. Verstärkte Vierdrahtleitung mit einem ersten Verstärker für die eine Kommunikationsrichtung und mit einem zweiten Verstärker für die andere Kommunikationsrichtung, wobei jeder Verstärker mit Steuermitteln versehen ist um den betreffenden Verstärkungsfaktor von einem hohen Wert auf einen niedrigen Wert oder umgekehrt umzuschalten, wobei die verstärkte Vierdrahtleitung mittels einer Gabelschaltung mit einer Zweidrahtleitung für zweirichtungskommunikation gekoppelt ist und wobei ein Detektionskreis vorhanden ist zum Erzeugen von Steuersignalen für die Steuermittel und zwar abhängig von der Richtung, in der Nettoenergie in der Zweidrahtleitung übertragen wird, dadurch gekennzeichnet, dass der genannte Detektionskreis (28) mit der Vierdrahtleitung (12, 13) gekoppelt ist, dass der Detektionskreis (28) Addiermittel (21) aufweist, die zum Erhalten der Summe der Spannungen in den Vierdrahtleitungen mit denselben gekoppelt sind, sowie Subtrahiermittel (22), die zum Erhalten der Differenz der Spannungen in den Vierdrahtleitungen mit denselben gekoppelt sind und dass der Detektionskreis weiterhin ein Phasendifferenzelement (25) aufweist, das zum Ermitteln des Phasenunterschiedes zwischen den Summen- und den Differenzspannungen zum Herleiten der Steuersignale für die Steuermittel (27) mit den Addierund Subtrahiermitteln (21, 22) gekoppelt ist.

2. Konferenzschaltung mit einem Konferenznetzwerk, mit dem drei oder mehr verstärke Vierdrahtleitungen nach Anspruch 1 gekoppelt sind, wobei jede verstärkte Vierdrahtleitung einen ersten Verstärker für die eine Kommunikationsrichtung und einen zweiten Verstärker für die andere Kommunikationsrichtung aufweist, wobei jeder Verstärker mit Steuermitteln versehen ist um den betreffenden Verstärkungsfaktor von einem hohen Wert auf einen niedrigen Wert oder umgekehrt umzuschalten, wobei die Vierdrahtleitung mittels einer Gabelschaltung mit einer Zweidrahtleitung für Zweirichtungskommunikation gekoppelt ist und wobei ein Detektionskreis vorhanden ist zum Erzeugen von Steuersignalen für die Steuermittel und zwar abhängig von der Richtung, in der Nettoenergie in der Zweidrahtleitung übertragen wird, wobei der genannte Detektionskreis mit der Vierdrahtleitung gekoppelt ist und wobei eine Teilnehmerstelle mit jeder der mit der Vierdrahtleitung gekoppelten Zweidrahtleitungen verbunden ist, dadurch gekennzeichnet, dass die Konferenzschaltung Mittel (31) aufweist zum Dämpfen des aus der einen Kommunikationsrichtung (112) eintreffenden Signals, wobei diese Dämpfungsmittel (31) zwischen dem Detektionskreis (128) und einer der Vierdrahtleitungen (112) liegen, sowie Mittel (32) zum Verstärken des aus der anderen Kommunikationsrichtung (113) eintreffenden Signals, wobei diese Verstärkungsmittel (32) zwischen dem Detektionskreis (128) und der anderen der Vierdrahtleitungen (113) liegen.

**Revendications**

1. Ligne à quatre fils amplifiée comprenant un premier amplificateur pour une direction de communication et un second amplificateur pour l'autre direction de communication, chaque amplificateur comprenant des moyens de commande pour commuter le facteur de gain correspondant d'une valeur élevée à une valeur peu élevée ou vice versa, la ligne à quatre fils étant couplée, par l'intermédiaire d'un termineur, à une ligne à deux fils en vue d'une communication bidirectionnelle, et un circuit de détection étant prévu pour produire des signaux de commande pour les moyens de commande, selon la direction dans laquelle de l'énergie de réseau est transmise dans la ligne à deux fils, caractérisée en ce que le circuit de détection (28) est couplé à la ligne à quatre fils (12, 13), que le circuit de détection (28) comprend un dispositif additionneur (21) couplé aux lignes à quatre fils pour l'obtention la somme des tensions dans les lignes à quatre fils et un dispositif soustracteur (22) couplé aux lignes à quatre fils pour l'obtention de la différence des tensions dans les lignes à quatre fils et que le circuit de détection comprend, en outre, un élément de différence de phase (25) couplé aux dispositifs additionneur et soustracteur (21 et 22) pour déterminer la différence de phase entre les tensions de somme et de différence en vue dériver les signaux de commande pour les moyens de commande (27).

2. Circuit de conférence comprenant un réseau de conférence auquel trois ou plus de trois lignes à quatre fils amplifiées suivant la revendication 1 sont connectées, chaque ligne à quatre fils amplifiée comprenant un premier amplificateur pour une direction de communication et un second amplificateur pour l'autre direction de communication, chaque amplificateur comprenant des moyens de commande pour commuter le facteur de gain en question d'une valeur élevée à une valeur peu élevée ou vice versa, la ligne à quatre fils étant couplée, par l'intermédiaire d'un termineur, à une ligne à deux fils en vue d'une communication bidirectionnelle, et un circuit de détection étant prévu pour produire des signaux de commande pour les moyens de commande selon la direction dans laquelle de l'énergie de réseau est transmise dans la ligne à deux fils, le dit circuit de détection est couplé à la ligne à quatre fils, un appareil d'abonné étant connecté à chaque ligne à deux fils connectée à la ligne à quatre fils, caractérisé en ce que le circuit de conférence comprend des moyens (31) pour affaiblir le signal provenant d'une direction de communication (112), ces moyens d'affaiblissement (31) étant connectés entre le circuit de détection (128) et une des lignes à quatre fils (112) et des moyens (32) pour amplifier le signal provenant de l'autre direction de communication (113), ces moyens d'amplification (32) étant connectés entre le circuit de détection (128) et l'autre des lignes à quatre fils (113).

FIG.1

FIG.2